# EUROPÄISCHE PATENTSCHRIFT

(11) **EP 1 173 825 B1**
(45) Veröffentlichungstag und Bekanntmachung des Hinweises auf die Patenterteilung: **27.11.2002**
(21) Anmeldenummer: 00920540.2
(22) Anmeldetag: 22.03.2000
(51) Int. Cl.: G06K 19/077, H03K 17/78

(54) **DATENTRÄGER MIT EINER BATTERIE UND EINER ANZEIGE**
DATA CARRIER WITH A BATTERY AND DISPLAY
SUPPORT DE DONNEES A PILE ET AFFICHAGE

(30) Priorität: 23.03.1999 DE 19913093
(43) Veröffentlichungstag der Anmeldung: 23.01.2002
(73) Patentinhaber: Giesecke & Devrient GmbH, 81677 München (DE)
(72) Erfinder: HOHMANN, Arno, D-81369 München (DE); GRAF, Hans, D-83026 Rosenheim (DE)
(74) Vertreter: Klunker . Schmitt-Nilson . Hirsch
(86) Internationale Anmeldenummer: EP0002544
(87) Internationale Veröffentlichungsnummer: WO00057355

(56) Entgegenhaltungen:
- EP-A- 0 585 154
- DE-A- 19 631 557
- FR-A- 2 694 439
- FR-A- 2 725 084

## Beschreibung

Die Erfindung betrifft einen Datenträger, insbesondere eine Chipkarte, mit einer Batterie und einer Anzeige.

Für den Zahlungsverkehr wurde in den letzten Jahren eine Geldkarte, eine sogenannte elektronische Börse, eingeführt, die von einer Chipkarte gebildet wird. An entsprechend ausgebildeten Terminals können Geldbeträge in den elektronischen Speicher der Chipkarte geladen werden, die später zur Zahlung von Einkäufen verwendet werden können.

Die bekannten Chipkarten weisen jedoch den Nachteil auf, daß es für den Benutzer nicht ersichtlich ist, welcher Geldbetrag jeweils noch zur Verfügung steht. Aus dem Artikel "Dünn wie Papier", Wirtschaftswoche vom 21.01.1999, ist eine Chipkarte bekannt, die es einem Benutzer ermöglicht, sich über den jeweils zur Verfügung stehenden Geldbetrag zu informieren. Die Chipkarte weist dazu eine Anzeige auf, die von einer Flachbatterie gespeist wird und mittels eines Schalters aktiviert werden kann.

Wegen des geringen Volumens der Chipkarte muß im Sinne einer langen Lebensdauer gewährleistet sein, daß die Anzeige nur dann mit Spannung versorgt wird, wenn dies vom Benutzer der Chipkarte beabsichtigt ist. Dies kann bei der bekannten Chipkarte aber nicht sicher gewährleistet werden, da Chipkarten üblicherweise in Geldbörsen oder Brieftaschen aufbewahrt werden. Aus diesem Grund ist die Wahrscheinlichkeit eines unbeabsichtigten Betätigen des Schalters sehr hoch, da die Chipkarte in der Geldbörse oder Brieftasche ständig von beiden Seiten Druck erfährt, der auch auf den Schalter einwirken kann. Dies würde zu einer relativ raschen Entladung der Batterie führen, wodurch insgesamt die Lebensdauer der Chipkarte herabgesetzt wird.

Aus FR 2 725 084 und FR 2 694 439 ist es bekannt, einen Schalter zwischen einer Batterie und einer Anzeige vorzusehen. Der Schalter wird von einer Solarzelle angesteuert und ermöglicht den Betrieb der Anzeige nur für den Fall, daß ausreichend Licht vorhanden ist.

Es ist daher Aufgabe der vorliegenden Erfindung, einen Datenträger, insbesondere eine Chipkarte, anzugeben, bei dem es nicht zu einer unbeabsichtigten Entladung der Batterie kommen kann und der einfach zu realisieren ist.

Diese Aufgabe wird durch die Merkmale des einzigen Anspruchs gelöst.

Die Erfindung geht dabei von der Überlegung aus, daß der Datenträger eine Solarzelle aufweist. Die Solarzelle verändert ihren Widerstand umgekehrt proportional zur Helligkeit. Bei geringer Helligkeit wird somit der Stromfluß zwischen Batterie und Anzeige unterbrochen.

Der Vorteil der Erfindung ist darin zu sehen, daß das eingangs beschriebene Problem der unbeabsichtigten Betätigung der Anzeige insbesondere in einer Brieftasche oder Geldbörse sicher vermieden werden kann, da in derartigen Behältnissen nahezu vollständige Dunkelheit herrscht. Ein Stromfluß zwischen Batterie und Anzeige wird deshalb sicher unterbunden. Zusätzlich unterbleibt der Betrieb der Anzeige immer dann, wenn keine ausreichende Helligkeit vorhanden ist, um die Anzeige ablesen zu können.

Weitere Vorteile der vorliegenden Erfindung ergeben sich aus der nachfolgenden Beschreibung anhand einer Figur.

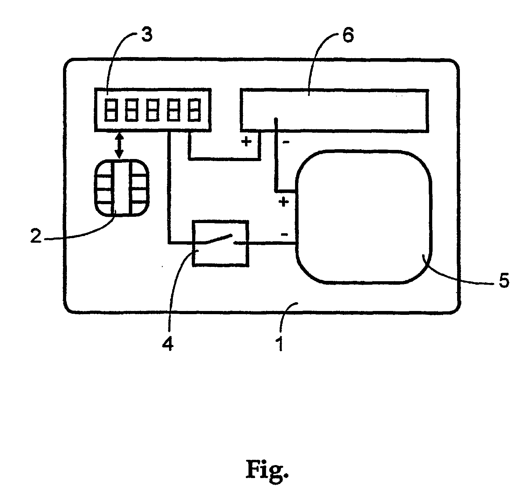

Die einzige Figur zeigt den schematischen Aufbau eines erfindungsgemäßen Datenträgers.

Die Figur zeigt einen Datenträger, bestehend aus einem Träger 1 mit einem elektronischen Schaltkreis 2, einer Anzeige 3, einer Batterie 5, die über einen Schalter 4 mit der Anzeige 3 verbunden ist und einer Einrichtung 6 zur Feststellung der Nutzbarkeit oder Wahrscheinlichkeit der Nutzung der Anzeige 3.

Die Anzeige 3 dient zur Darstellung von in dem elektronischen Schaltkreis 2 enthaltenen Daten. Die Anzeige 3 kann über den Schalter 4 aktiviert werden und zeigt dann den Dateninhalt des Schaltkreises 2 an. Ein entsprechender Dateninhalt kann z. B. der Guthabenstand einer elektronischen Geldbörse sein. Im Gegensatz zum in der Figur dargstellten schematischen Aufbau des Datenträgers kann ein abweichender Aufbau gewählt werden. Beispielsweise kann es sich bei dem elektronischen Schaltkreis anders als dargestellt nicht um einen kontaktbehafteten, sondern um einen kontaktlosen elektronischen Schaltkreis 2 handeln. Der elektronische Schaltkreis 2 weist dann geeignete Koppelelemente, z. B. Antennen, auf. Der elektronische Schaltkreis 2 kann außerdem auch von der Batterie 5 mit Spannung versorgt werden. Abweichend von dem in der Figur dargestellten schematischen Aufbau können die einzelnen Elemente des Datenträgers sich auch überlagern. Beispielsweise kann die Batterie 5 so ausgebildet sein, daß sie auch unter die Anzeige und/oder unter die Einrichtung 6 reicht.

Wird der Schalter 4 betätigt, um die Anzeige 3 zu aktivieren, so wird die Anzeige 3 von der Batterie 5 mit Spannung über den Schalter 4 und die Einrichtung 6 zur Feststellung der Nutzbarkeit oder der Wahrscheinlichkeit der Nutzung mit Strom versorgt. Die Einrichtung 6 zur Feststellung der Nutzbarkeit oder Wahrscheinlichkeit der Nutzung der Anzeige 3 überprüft dabei im aktivierten Zustand laufend, ob die Anzeige überhaupt von einem Benutzer gelesen werden kann oder ob eine gewisse Wahrscheinlichkeit vorliegt, daß die Anzeige genutzt bzw. von einem Benutzer gelesen wird. Stellt die Einrichtung 6 fest, daß die Nutzubarkeit nicht gegeben ist bzw. daß die Wahrscheinlichkeit der Nutzung der Anzeige durch einen Benutzer gering ist, unterbricht sie die elektrische Verbindung zwischen der Batterie 5 und der Anzeige 3. Diese kann, wie in der Figur dargestellt, durch die Unterbrechung einer Versorgungsleitung geschehen, es ist aber auch möglich, beide Versorgungsleitungen zu unterbrechen. Abweichend von der Unterbrechung einer oder beider Versorgungsleitungen ist es auch möglich, den Widerstand innerhalb des Kreises aus Anzeige und Batterie so zu erhöhen, daß kein oder jedenfalls nur ein sehr geringer Strom fließen kann.

In einer Ausführungsform wird die Einrichtung 6 zur Feststellung der Nutzbarkeit der Anzeige 3 von einer Solarzelle gebildet Die Solarzelle wird in Reihe mit der Batterie 5 geschaltet. Im Dunkelzustand bzw. bei einer geringen Helligkeit kann durch die Solarzelle nur ein geringer Strom fließen, wodurch sich insgesamt ein hoher elektrischer Widerstand ergibt, der einem schnellen Entladen der Batterie dann entgegenwirkt, wenn die Anzeige nicht genutzt werden kann und irrtümlich in Betrieb genommen wurde, beispielsweise dann, wenn sie in einer Brieftasche aufbewahrt wird.

Wird die Einrichtung 6 zur Feststellung der Nutzbarkeit der Anzeige 3 durch eine Solarzelle gebildet, so wird die Anzeige 3 als zusätzlicher Unterbrecher verwendet. Dies läßt sich dadurch erreichen, daß die Spannung der Batterie 5 geringer als die Schwellspannung der Anzeige 3 gewählt wird. Beispielsweise liefern für Chipkarten geeignete Lithiumflachzellen eine mittlere Entladungspannung von ca. 2,85 V. Um gängige Anzeigen, z. B. Leuchtdiodenanzeigen, betreiben zu können, ist aber eine Schwellspannung von 3 bis 3,5 V nötig. Wird nun, wie oben beschrieben, die Solarzelle in Reihe mit der Batterie 5 geschaltet, läßt sich die benötigte Schwellspannung von 3 bis 3,5 V leicht erreichen, wenn die Solarzelle eine Spannung von beispielsweise 0,5 V liefert. Bei nicht ausreichender Helligkeit fällt die insgesamt zur Verfügung stehende Spannung unter die Schwellspannung, wodurch der Strornfluß von der Batterie durch die Solarzelle und die Anzeige selbst unterbrochen wird. Die Anordnung der Solarzelle in Reihe mit einer Batterie zur Erreichung der für die Anzeige nötigen Schwellspannung weist darüber hinaus den Vorteil auf, daß für den Betrieb der Anzeige 3 nicht wie üblich ein Spannungswandler nötig ist. Dadurch wird die Lebensdauer der Batterie zusätzlich verlängert, da derartige Spannungswandler üblicherweise nur einen Wirkungsgrad von ca. 80 % aufweisen.

## Patentansprüche

1. Datenträger, insbesondere Chipkarte, bestehend aus einem Träger (1) mit mindestens einem elektronischen Schaltkreis (2), einer Batterie (5) und einer Anzeige (3), wobei der Datenträger eine Solarzelle (6) zur Feststellung der Nutzbarkeit oder Wahrscheinlichkeit der Nutzung der Anzeige (3) aufweist, **dadurch gekennzeichnet, daß** die Solarzelle und die Batterie (5) elektrisch in Reihe geschaltet sind, wobei die Spannung der Batterie (5) geringer als die Schwellspannung der Anzeige (3) ist.

## Claims

1. A data carrier, in particular smart card, comprising a carrier (1) with at least an electronic circuit (2), a battery (5) and a display (3), the data carrier having a solar cell (6) for detecting the usability or probability of use of the display (3), **characterized in that** the solar cell and the battery (5) are electrically connected in series, the voltage of the battery (5) being lower than the threshold voltage of the display (3).

## Revendications

1. Support de données, en particulier carte à puce, formée d'un support (1) avec au moins un circuit de commutation électronique (2), une batterie (5) et un affichage (3), le support de données présentant une cellule solaire (6) pour fixer la possibilité d'utilisation ou la probabilité d'utilisation de l'affichage (3), **caractérisé en ce que** la cellule solaire et la batterie (5) sont branchés électriquement en série, la tension de la batterie (5) étant inférieure à la tension de seuil de l'affichage (3).
